# EUROPEAN PATENT APPLICATION

(11) **EP 1 935 370 A1**
(43) Date of publication of application: **25.06.2008**
(21) Application number: 07254999.1
(22) Date of filing: 20.12.2007
(51) Int. Cl.: A61C 15/02, A61C 15/04

(54) **Dental floss holder**

(30) Priority: 22.12.2006 US 615464
(71) Applicant: Ranir LLC, Grand Rapids, MI 49512 (US)
(72) Inventor: Crossman, Scott P., Rockford Michigan 49341 (US)
(74) Representative: Ruhrmann, Andrea Elizabeth

(57) **Abstract**

A dental floss holder includes an integral interproximal pick having a plurality of outwardly extending nubs. In one embodiment, the dental floss holder includes a handle having a first portion and a second portion. A pair of arms extend from the first portion with a strand of dental floss stretched therebetween. An interproximal pick extends from the second portion. The interproximal pick includes a plurality of nubs that extend outwardly from the pick. The handle, arms and interproximal pick may be a single, integrally molded piece.

## Description

### BACKGROUND OF THE INVENTION

The present invention relates to dental floss holders.

Dental floss holders are well known for aiding consumers in flossing teeth. These devices generally include a handle, and a pair of spaced apart arms extending from the handle with a strand of dental floss stretched between the arms. The dental floss is held in tension between the arms, so that a user can grip the handle to insert the floss between the user's teeth.

Some dental floss holders are molded from a thermoplastic, with the dental floss inserted in the mold and molded in place into the arms of the dental floss holder. Examples of these holders include U.S. Patent D301,071 to Franchi, U.S. Patent D316,617 to Cheung, U.S. Patent D279,826 to Schindler, and U.S. Patent D276,088 to Fong. These dental floss holders provide benefits in manufacturing, because they only require a single molding material, and can be formed in a single molding step. Additional benefits are provided by recent thermoplastic dental floss holders that also include an integral toothpick. For instance, the dental floss holder may include an elongated base having a pair of arms extending from one side and carrying a strand of floss, and a toothpick extending from a second side opposite the first side.

Despite the availability of current devices, manufacturers are continually striving to create dental devices with increased shelf appeal and increased function.

### SUMMARY OF THE INVENTION

The aforementioned problems are overcome by the present invention, wherein a dental floss holder includes an interproximal pick with a plurality of outwardly extending nubs.

The invention is defined in the independent claims. Preferred or optional features are set out in the dependent claims

In one embodiment, the dental floss holder includes a handle having a first portion and a second portion. A pair of arms extends from the first portion. The arms are spaced apart and include a strand of dental floss stretched therebetween. An interproximal pick extends from the second portion. The interproximal pick includes a plurality of nubs that extend outwardly from the pick. The handle, arms and interproximal pick are molded from a single, integrally molded piece.

In another embodiment, the dental floss holder includes a handle, a pair of arms extending from a first portion of the handle, a strand of dental floss material extending between the arms, an elongated shaft extending from a second portion of the handle, and a sleeve on at least a portion of the shaft. The sleeve includes an outer surface having a plurality of nubs extending outwardly therefrom. The handle, arms and elongated shaft are molded from a single piece, and the sleeve is a softer material that is molded over the shaft.

The present invention provides advantages in functionality and manufacturing, while also improving aesthetics. The interproximal pick including the nubs increases the cleaning effectiveness between teeth. In addition, the embodiment including a sleeve formed from a softer material is less harmful to a user's teeth and gums than a traditional toothpick. The dental floss holder, including the floss and the pick, are molded in a single molding step, such that the increased functionality does not substantially increase manufacturing time.

These and other objects, advantages, and features of the invention will be readily understood and appreciated by reference to the description of the current embodiments and the drawings.

### BRIEF DESCRIPTION OF THE DRAWINGS

Fig. 1 is a perspective view of a dental floss holder according to one embodiment of the present invention;
Fig. 2 is a side view of the dental floss holder thereof;
Fig. 3 is a top view of the dental floss holder thereof;
Fig. 4 is a cross sectional view of the dental floss holder thereof, taken along line 4-4 in Fig. 2;
Fig. 5 is a front view of the dental floss holder thereof;
Fig. 6 is a close up view of the interproximal pick according to one embodiment of the present invention.
Fig. 7 is a perspective view of a dental floss holder according to a second embodiment of the present invention;
Fig. 8 is a side view of the dental floss holder thereof;
Fig. 9 is a top view of the dental floss holder thereof;
Fig. 10 is a cross sectional view of the dental floss holder thereof, taken along line 10-10 in Fig. 8.
Fig. 11 is a front view of the dental floss holder thereof;
Fig. 12 is a close up view of the interproximal pick according to the second embodiment.

### DETAILED DESCRIPTION OF THE CURRENT EMBODIMENT

### I. Overview

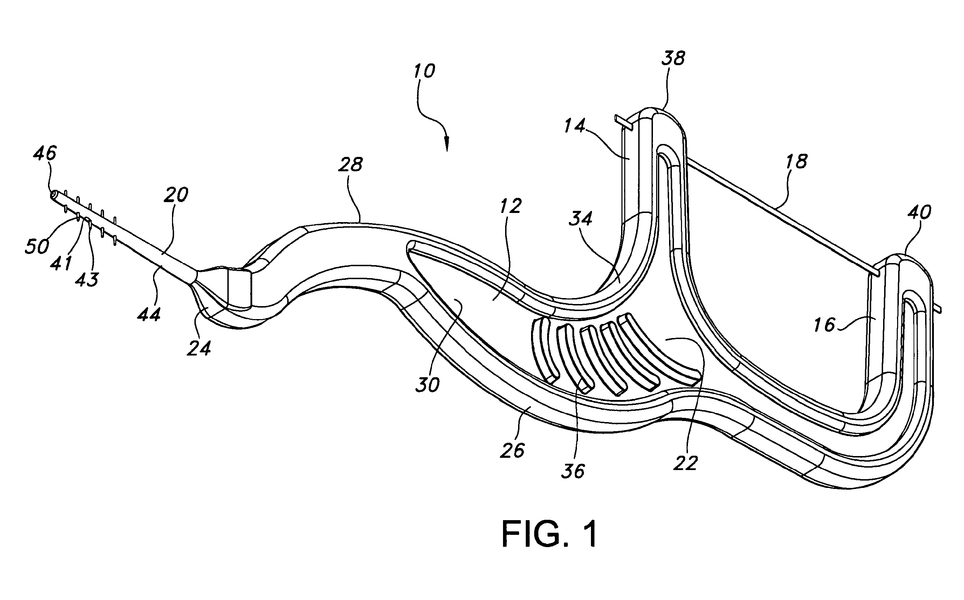

A dental floss holder according to one embodiment of the present invention is shown generally in Figure 1, and generally designated 10. In general, the dental floss holder includes a handle 12, a pair of arms 14 and 16 extending from one end of the handle 12 and holding a length of dental floss 18, and an interproximal pick 20 extending from the other end of the handle 12.

### II. Structure

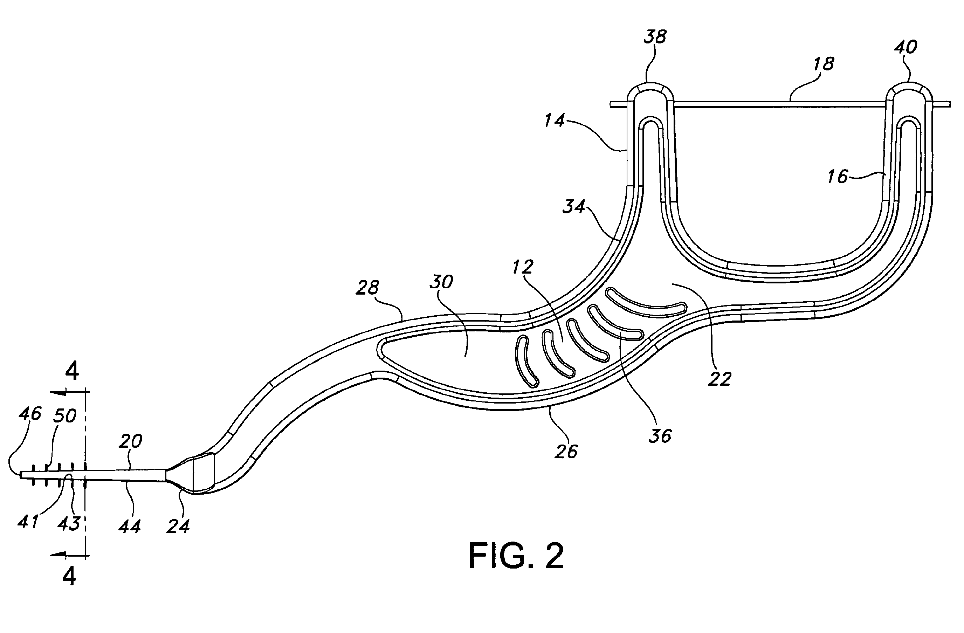

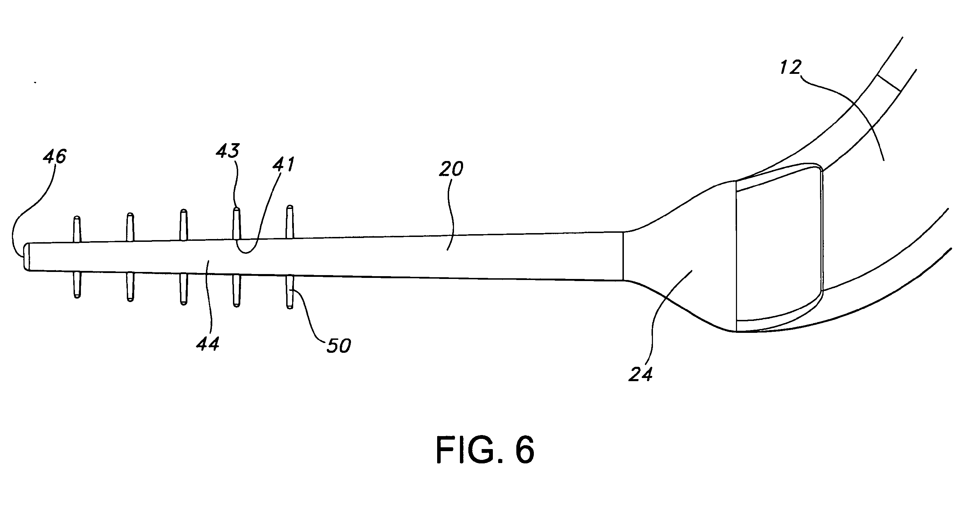

The dental floss holder 10 is typically formed from an injection molded plastic. In the embodiment shown in Figs. 1-6, the dental floss holder is integrally formed from a single, unitary piece of molded thermoplastic. The handle 12 includes a first end 22, a second end 24, a top edge 26, a bottom edge 28, and first and second side surfaces 30 and 32. In the illustrated embodiment, the handle 12 is elongated, having a curved shape that tapers from the first end 22 to the second end 24. Alternatively, the handle 12 may have a variety of different shapes, and may have a different length. Also in the illustrated embodiment, at least a portion of the handle includes a peripheral flange 34, such that the portion has an I-beam shaped cross section. A plurality of curved protrusions 36 extend from the first 30 and second 32 side surfaces of the handle and are positioned inside the portion formed by the peripheral flange.

The pair of spaced apart arms 14 and 16 extend from the first end 22 of the handle 12. In the illustrated embodiment, the arms are parallel, and at least a portion of the arms 14, 16 includes the same peripheral flange 34 as the handle 12. The first arm 14 terminates in a tip 38, and the second arm terminates in a tip 40. A strand of dental floss 18 is attached to each of the arms 14, 16 near the tips 38 and 40 such that it is stretched across the span between the arms 14, 16 and held in tension. The floss 18 may be attached to the arms by a variety of methods. In one embodiment, the floss 18 is molded in place into the arms 14, 16, such that the floss extends straight through both of the arms 14, 16, with a portion extending out the reverse side of each arm that may be trimmed to a desired length. The floss 18 may be comprised of a variety of suitable materials, such nylon or similar material, PTFE, for example.

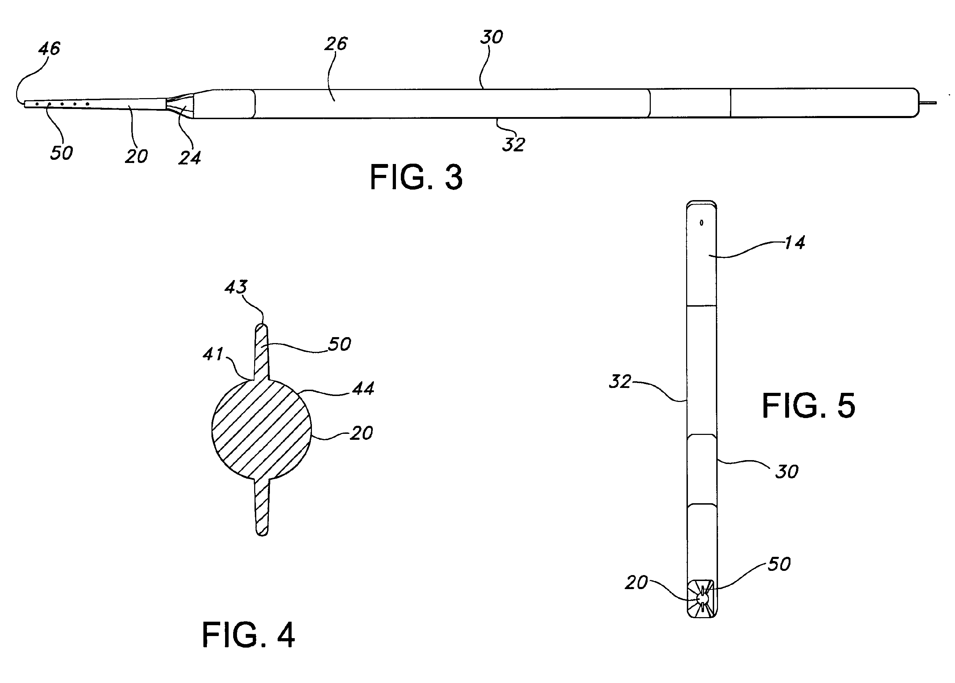

In the illustrated embodiment, the interproximal pick 20 extends from the second end 24 of the handle 12. Alternatively, the interproximal pick could extend from another location on the handle 12, such as the top edge 26 or the bottom edge 28. As shown in Figs. 1-6, the interproximal pick 20 is molded as an integral, unitary piece with the handle 12 and arms 14 and 16. In the illustrated embodiment, the pick 20 is generally frustoconical in shape, but it may be conical, cylindrical, or have another cross-section such as rectangular or triangular. The pick 20 has a sidewall 44 that terminates in a tip 46. A number of nubs 50 protrude outwardly from the sidewall 44. As shown in Fig. 4, the nubs 50 and pick 20 may be comprised of a single material. As shown in Figs. 1-6, in one embodiment, the nubs 50 are substantially conical in shape, and they protrude radially outwardly from the sidewall 44 along a common diameter of the pick 20. Each nub 50 includes a base 41 and a tip 43. In one embodiment, the diameter of the nubs at the base 41 is approximately 0.006". Alternatively, the diameter of the nubs 50 could range from 0.002" to 0.015" or from 0.001" to 0.025". The nubs 50 are approximately evenly spaced throughout approximately the distal half of the pick 20. In an alternative embodiment, the nubs 50 could be positioned along the entire length of the pick 20, and could extend radially outwardly in any desired direction.

### III. Manufacture

The manufacture of the dental floss holder shown in Figs. 1-6 can be performed in a single step. In this embodiment, a mold (not shown) includes a cavity having the general shape of the dental floss holder, including the nubs 20. A strand of floss 18 is stretched through the mold such that it extends through the cavity at the location of the ends of the arms 14, 16. A thermoplastic is injected into the mold about the floss 18, such that the floss is molded in place in the arms 14, 16. The formed dental floss holder 10, including the interproximal pick 20 can then be removed from the mold, and the excess floss trimmed from the outside edges of the arms 14, 16.

### IV. Alternative Embodiment

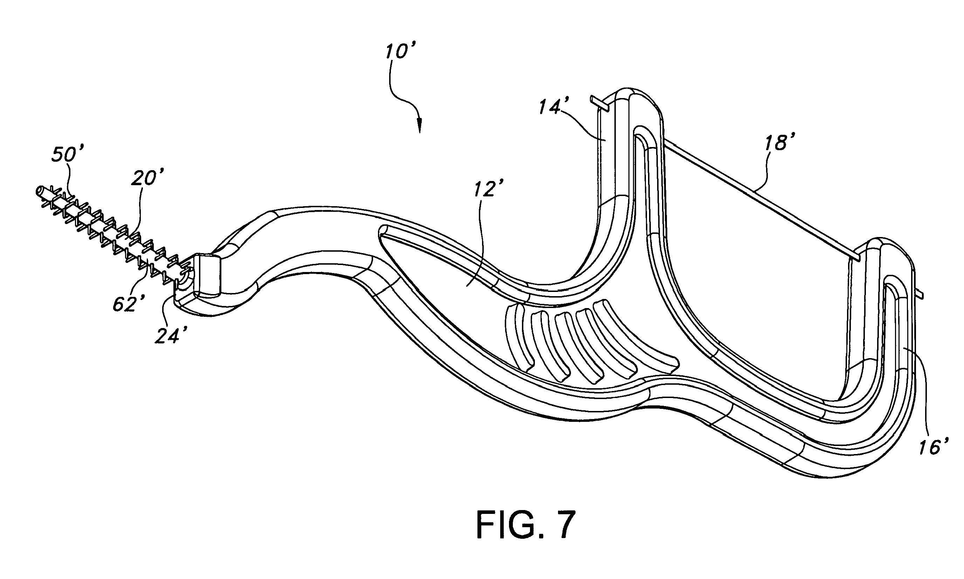

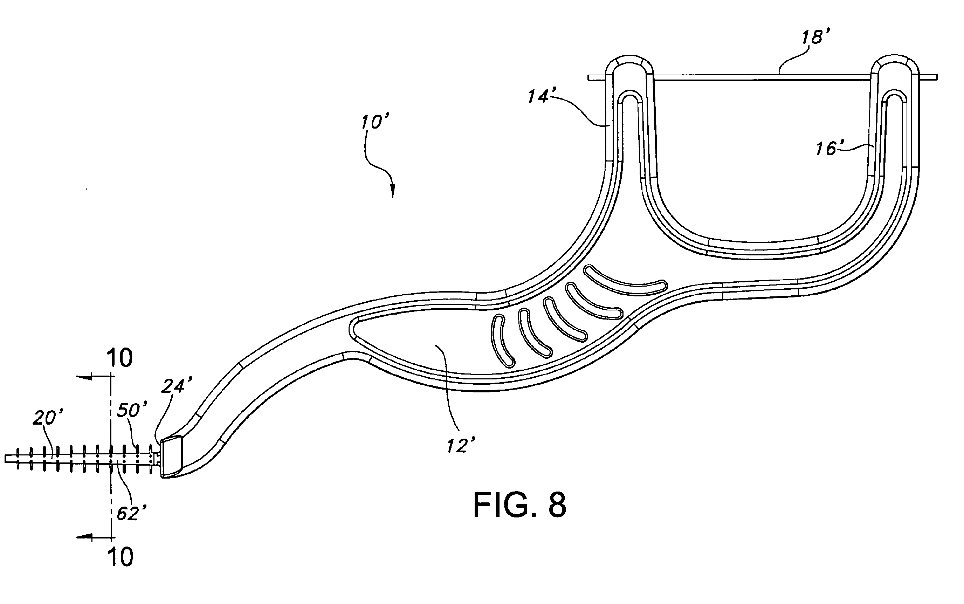

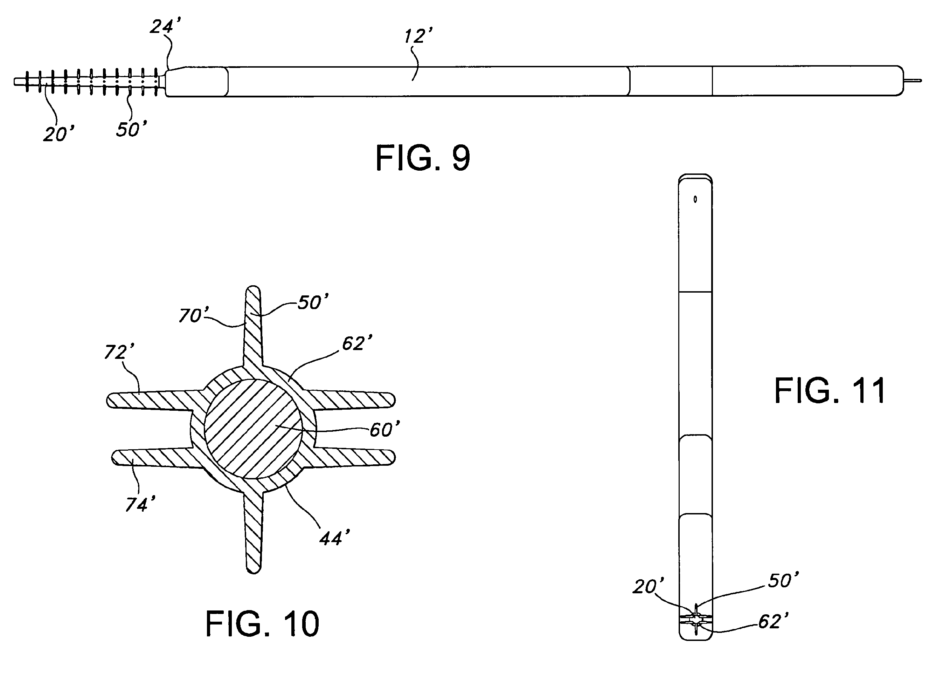

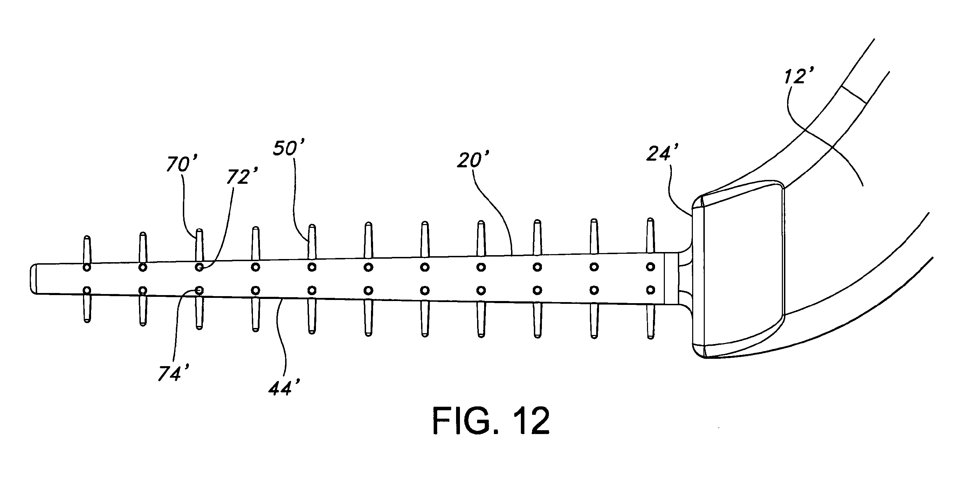

An alternative embodiment of the dental floss holder 10' is shown in Figs. 7-12. In this embodiment, the interproximal pick 20' is comprised of an elongated shaft 60' and a sleeve 62'. As in the first described embodiment, the interproximal pick 20' may extend from the second end 24' of the handle 12'. In the embodiment shown in Figs. 10 and 12, the elongated shaft 60' is molded integrally with the handle 12 from the same material as the handle 12. As shown, the elongated shaft 60' is frustoconical in shape, however, the shaft 60' may have a variety of shapes or cross-sections. The sleeve 62' is typically formed over the elongated shaft 60'. In the embodiment illustrated in Figs. 7-12, the sleeve 62' extends over substantially all of the elongated shaft 60'. The sleeve 62' may be formed from a softer (i.e. lower durometer value), and more flexible, material than the elongated shaft 62'. The sleeve 62' may include an outer surface 44' having a plurality of outwardly extending nubs 50'. In one embodiment, the durometer of the sleeve 62' is 50 Shore A to provide the sleeve 62' and nubs 50' with a desired level of comfort. Alternatively, the durometer of the sleeve 62' may range from 20 to 90 Shore A. As shown in Fig. 8, the nubs 50' may be approximately evenly spaced along the length of the pick 20'. As in the first embodiment, the nubs 50' may extend outwardly from the surface 44' in any desired direction. In the embodiment shown in Fig. 10, a first pair of nubs 70' extend radially outwardly from the surface 44'. A second 72' and third 74' pair of nubs extend generally parallel to each other and at a right angle to the first pair 70'.

Manufacture of the dental floss holder 10' of the second embodiment is similar to the manufacture of the dental floss holder 10 of the first embodiment,. However, the dental floss holder 10' of the second embodiment is typically molded in two stages, with the handle 12', arms 14', 16' and elongated shaft 60' of the interproximal pick 20' molded integrally in the first stage, and the sleeve 62' molded from a second material over the elongated shaft 60' in the second stage.

The above description is that of the current embodiments of the invention. Various alterations and changes can be made without departing from the invention as defined in the appended claims, which are to be interpreted in accordance with the principles of patent law. Any reference to claim elements in the singular, for example, using the articles "a," "an," "the" or "said," is not to be construed as limiting the element to the singular.

## Claims

1. A one-piece, unitary dental floss holder comprising:
a handle having a first portion and a second portion;
a pair of spaced apart arms extending from the first portion and adapted to support a strand of dental floss extending between said arms; and
an interproximal pick extending from said second portion of said handle, said interproximal pick including a plurality of nubs formed integrally with said interproximal pick and extending outwardly therefrom.

2. The dental floss holder of claim 1 wherein said interproximal pick includes a length, and wherein said nubs are spaced apart along a portion of said length of said interproximal pick.

3. The dental floss holder of claim 2 wherein said portion of said length is approximately the distal half of said length of said interproximal pick.

4. The dental floss holder of claim 3 wherein said strand of dental floss is molded in place into said arms.

5. The dental floss holder of claim 1 wherein said nubs are conical protrusions.

6. A dental floss device comprising:
a one-piece handle having a first portion and a second portion, a pair of arms extending from said first portion, and an elongated shaft extending from said second portion;
a strand of dental floss material extending between said arms; and
a sleeve extending over at least a portion of said shaft, said sleeve including an outer surface having a plurality of nubs extending outwardly therefrom.

7. The dental floss holder of claim 6 wherein said sleeve extends over substantially all of said elongated shaft.

8. The dental floss holder of claim 6 wherein said handle, said arms, and said elongated shaft are a single unitary piece comprised of a first material, and where said sleeve is comprised of a second material, said second material being softer than said first material.

9. The dental floss holder of claim 8 wherein said plurality of nubs are comprised of said second material and are formed integrally with said sleeve.

10. The dental floss holder of claim 6 wherein said dental floss material is molded in place into said arms.

11. A dental floss holder comprising:
a base portion;
a pair of arms extending from said base portion, said arms spaced apart and adapted to hold a strand of dental floss therebetween; and
an elongated shaft extending from said base portion, said elongated shaft having a sidewall, and a plurality of protrusions extending outwardly from said sidewall.

12. The dental floss holder of claim 11 including a strand of dental floss that is molded in place into said arms such that it stretches between said arms.

13. The dental floss holder of claim 11 wherein said base portion, said arms, said elongated shaft and said plurality of protrusions are molded integrally as a unitary piece.

14. The dental floss holder of claim 11 wherein said base portion, said arms, and said elongated shaft are integrally molded from a first material, and wherein said nubs are formed from a second material.

15. The dental floss holder of claim 14 wherein said second material is softer than said first material.

16. The dental floss holder of claim 14 including a sleeve overlying a portion of said elongated shaft, said nubs formed integrally with said sleeve.

17. The dental floss holder of claim 15 wherein said sleeve overlies substantially all of said shaft.

18. The dental floss holder of claim 11 wherein said protrusions are conical nubs extending outwardly from said elongated shaft.
